# EUROPEAN PATENT APPLICATION

(11) **EP 1 441 164 A1**
(43) Date of publication of application: **28.07.2004**
(21) Application number: 04380014.3
(22) Date of filing: 20.01.2004
(51) Int. Cl.: F16L 11/26, F16L 11/08, F16L 59/153, F16L 59/14

(54) **Insulation tube**

(30) Priority: 27.01.2003 ES 200300281
(71) Applicant: RELATS, S.A., 08140 Caldes de Montbui (ES)
(72) Inventor: Relats Manent, Jordi, 08140 Caldes de Montbuis (ES); Relats Casas, Pere, 08140 Caldes de Montbuis (ES); Artola Sole, Dolors, 08140 Caldes de Montbuis (ES); Fruns Martin, Anna, 08140 Caldes de Montbuis (ES)
(74) Representative: Ponti Sales, Adelaida

(57) **Abstract**

The insulation tube (1) is composed by a plurality of multifilament yarns that are knitted together, and it is characterised in that it comprises a plurality of longitudinal reinforcement lines (2) which include another supplementary multifilament yarn of greater width.

The number of longitudinal reinforcement lines (2) is comprised between 2 and 30.

The insulation tube (1) eliminates vibrations and ensures good thermal insulation. This is due to the fact that the insulation tube is expansible and can return to its initial state after said expansion.

## Description

The invention refers to an insulation tube especially suitable for use as an insulating and protective element for gas conductor tubes.

### BACKGROUND OF THE INVENTION

Insulation tubes are currently used in the automotive industry to insulate tubes carrying engine exhaust fumes both thermally and mechanically.

These tubes should combine different specifications to make them suitable for this type of use.

In the first place, these protective tubes should have a sound thermal and mechanical resistance as they are used in areas that are subjected to high temperatures and vibrations.

Secondly, it is extremely important that the exhaust fumes expelled from the engine lose as little temperature as possible when they circulate in the tubes, since some of the elements work optimally within a certain range of temperatures, such is the case of the catalyser, for example.

Therefore, it is essential that these tubes present good properties as thermal insulators.

So as to solve these inconveniences there are already tubes manufactured in heat-resistant textile materials that combine these characteristics and are currently used to insulate the tubes carrying engine exhaust fumes, both thermally and mechanically.

The insulation tube of this invention solves the aforementioned inconveniences, and also presents other advantages which will be described hereunder.

### DESCRIPTION OF THE INVENTION

The insulation tube of the invention is composed by a plurality of multifilament yarns that are knitted together, and is characterised in that it comprises a plurality of longitudinal reinforcement lines which include another supplementary multifilament yarn of greater width.

Preferably, the number of longitudinal reinforcement lines is comprised between 2 and 30.

According to a preferred embodiment, the multifilament yarns comprise 2 136 tex filaments and the supplementary multifilament yarns comprise 6 136 tex filaments.

Advantageously, the yarns are constituted by fibres that contain silicon and are covered with a silicone emulsion.

The tube's interior and exterior surfaces should preferably be reversible.

Thanks to the insulation tube of this invention, it is possible to eliminate vibrations and ensure major thermal insulation. This is due to the fact that the insulation tube of this invention is expandable and can return to its initial state after said expansion, thus it is always packed against the element it is covering.

### BRIEF DESCRIPTION OF THE DRAWINGS

For a better understanding of what have been exposed, some drawings are enclosed, in which, diagrammatically and only as a non-limitative example, is represented a practical case of embodiment.
Fig. 1 is cross-section view of the protecting tube of the present invention, in its right side out position;
Fig. 2 is cross-section view of the protecting tube of the present invention, in its inside out position.

### DESCRIPTION OF A PREFERRED EMBODIMENT

The insulation tube 1 of this invention is composed by a plurality of multifilament yarns that are knitted together, comprising a series of longitudinal reinforcement lines 2, in a number comprised between two and thirty, which include another supplementary multifilament yarn of greater width.

All these yarns are joined together by the warp knitting technology, forming into each other preferentially a tricot type weave.

The multifilament yarns comprise two 136 tex filaments and the supplementary multifilament yarns comprise 6 136 tex filaments.

Said yarns are constituted by fibres that contain silicon and are covered with a silicone emulsion.

The insulation tube of this invention is reversible, i.e. it can be used exposing either of its surfaces to the exterior (either inside out or right side out). If used inside out, the insulation tube of the invention presents a more polygonal transversal section and its thermal insulating capacity is increased.

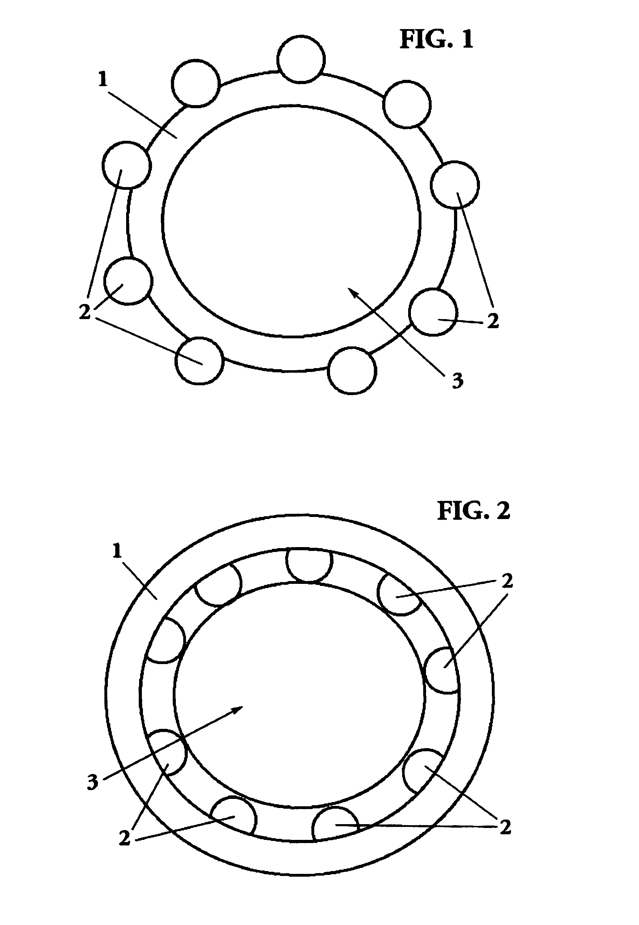

To see more clearly this effect in fig. 1 and 2 the covered element 3 has been shown, in which it can be seen the air chamber (mainly in fig. 2) which exists between the covered element 3 and the protection tube of the present invention 1, thanks to the presence of the longitudinal reinforcement lines 2.

In order to prove the advantages of the insulation tube of this invention, it has been compared to other insulation tubes manufactured and marketed by the same holder of this application.

The tables that appear below include the specifications of these yarns, which have also been identified by their commercial name. Specifically, the insulation tubes of the invention have been identified with the names Supersleeve 600 STAR-S (right side out) and Supersleeve 600 STAR-R (inside out).

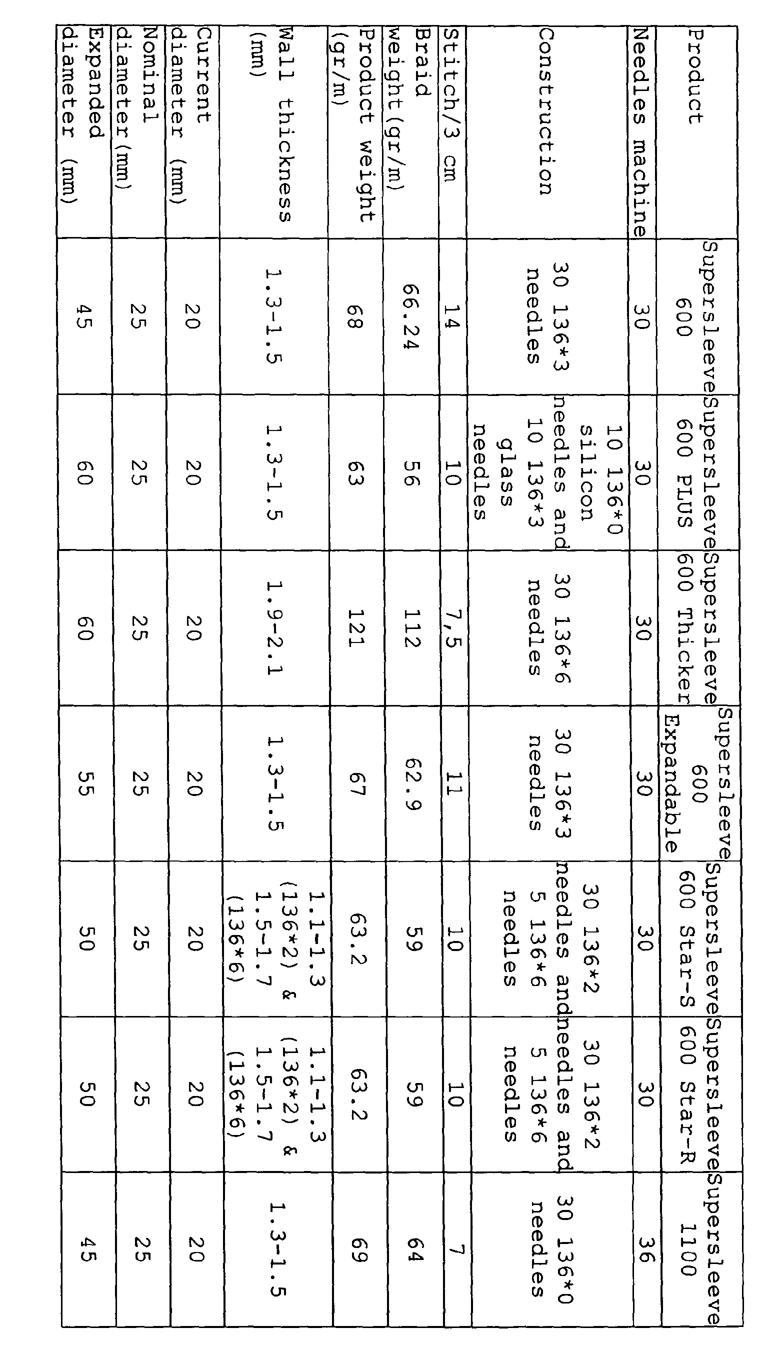

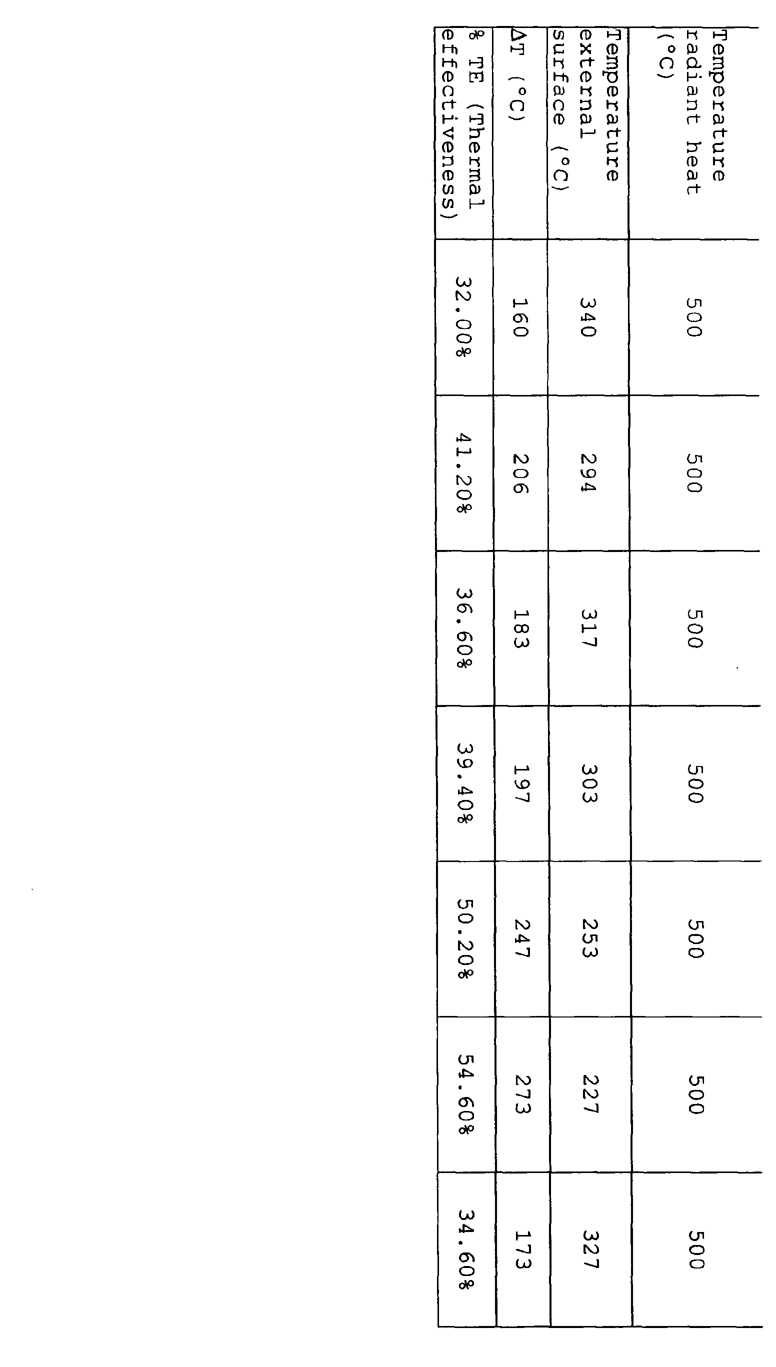

Although this refers to a specific embodiment of the invention, obviously a person skilled in the art will know that the insulation tube described herein may undergo many variations and modifications and that all the details mentioned may be replaced by others that are technically equivalent, without departing from the scope of protection defined by the claims attached.

## Claims

1. Insulation tube (1), composed by a plurality of multifilament yarns that are knitted together, **characterised in that** it comprises a plurality of longitudinal reinforcement lines (2) which include another supplementary multifilament yarn of greater width.

2. Tube, according to claim 1, **characterised in that** the number of longitudinal reinforcement lines (2) is comprised between 2 and 30.

3. Tube, according to claim 1, **characterised in that** the multifilament yarns comprise 2 136 tex filaments and the supplementary multifilament yarns comprise 6 136 tex filaments.

4. Tube, according to claim 1, **characterised in that** the yarns are constituted by fibres that contain silicon and are covered with a silicone emulsion.

5. Tube, according to claim 1, **characterised in that** the tube's interior and exterior surfaces are reversible.

6. Tube, according to claim 1, **characterised in that** it is expandable and can return to its initial state after said expansion.
